# EUROPÄISCHE PATENTSCHRIFT

(11) **EP 0 556 703 B1**
(45) Veröffentlichungstag und Bekanntmachung des Hinweises auf die Patenterteilung: **05.07.1995**
(21) Anmeldenummer: 93102071.3
(22) Anmeldetag: 10.02.1993
(51) Int. Cl.: F16F 13/00

(54) **Hydraulisch dämpfendes Zweikammer-Motorlager**
Hydraulic engine damper with two chambers
Support d'amortissement hydraulique à deux chambres pour moteur

(30) Priorität: 21.02.1992 DE 4205353
(43) Veröffentlichungstag der Anmeldung: 25.08.1993
(73) Patentinhaber: METZELER GIMETALL AG, D-80992 München (DE)
(72) Erfinder: Härtel, Volker, Dr., W-8034 Germering (DE); Hofmann, Manfred, Dipl.-Ing., W-6257 Hünfelden 1 (DE)
(74) Vertreter: Preissner, Nicolaus, Dipl.-Ing.

(56) Entgegenhaltungen:
- EP-A- 0 036 470
- EP-A- 0 346 060
- US-A- 4 651 980

## Beschreibung

Die Erfindung bezieht sich auf ein hydraulisch dämpfendes Zweikammer-Motorlager, dessen mit Flüssigkeit gefüllte und gummielastische Umfangswände aufweisende Kammern über einen, in einer starren Zwischenplatte angeordneten Kanal miteinander in Verbindung stehen und in dessen Zwischenplatte eine stirnseitig zumindest zentral offene Kammer eingelassen ist, in der eine beiderseits von Flüssigkeit beaufschlagte und parallel zur Richtung eingeleiteter Schwingungen bewegliche Membranplatte eingespannt ist.

Die Membranplatte als sogenannte Entkopplungsmembran hat in Hydrolagern die Aufgabe, die eingeleiteten Schwingungen geringer Amplitude hydraulisch zu "entkoppeln", d.h. den hydraulischen Überströmkanal nicht wirksam werden zu lassen. Damit ist das Lager für Schwingungen kleiner Amplitude weich, so daß der durch die hydraulische Dämpfung hervorgerufene zusätzliche Verformungswiderstand nicht zum Tragen kommt. Erst wenn die Membran am Anschlag ist, strömt auch Flüssigkeit durch den Überströmkanal und bewirkt Dämpfung und eine erhöhte Steifigkeit.

Solche Membranen müssen demnach leicht beweglich sein, sie sollen sich nicht schlagartig an die Käfigwand anlegen, sondern mit einer progressiven Kennung versehen sein und müssen weitgehend einen Flüssigkeitsaustausch zwischen Arbeits- und Ausgleichskammer unterbinden, so daß sie nicht einen Bypass für den Hauptkanal des Lagers bilden. Daher bereitet die Lagerung und Einspannung der Membranplatte dem Konstrukteur ein besonderes Problem.

Bei einem hydraulisch gedämpften Motorlager ohne Entkopplungsmembran stellt sich bei geschlossenem Kanal das Druck/Volumen-Diagramm bei Einfederung praktisch als Gerade mit konstanter Steigung dar. Bei einem Lager mit einer losen Entkopplungsmembran verläuft diese pV-Kennlinie bei einer geringen Einfederung zunächst nahezu horizontal, bis der Freiweg der Membran durchmessen ist und die Membranplatte an der gegenüberliegenden Käfigwand anschlägt.

Von diesem Punkt an hat das Lager wieder seine ursprüngliche Volumensteifigkeit, wie sie sich ohne Entkopplungsmembran ergibt. Ein Lager mit einer solchen frei beweglichen Membranplatte, wie sie beispielsweise in der DE 27 27 244 A1 beschrieben ist, bietet zwar eine optimale Entkopplung für kleine Amplituden, hat aber den großen Nachteil, daß sie bei größeren Amplituden durch Anschlagen an ihre Begrenzungsflächen Geräusche verursacht, die sich als störendes Klappern oder Klopfen äußern.

Es ist daher versucht worden, diese Anschlaggeräusche dadurch zu unterbinden, daß die Membranplatte zwischen 2 Gummiringen am äußeren Umfang auf der Ober- und Unterseite eingespannt ist, wie ebenfalls in der DE 27 27 244 A1 beschrieben.

Eine solche elastische Membranlagerung über druckbeaufschlagte Gummielemente hat aber erhebliche herstellungstechnische Schwierigkeiten für das Lager. Darüberhinaus ist die Entkopplungsfunktion, die ja für kleine Amplituden einer sehr weichen Membranaufhängung (Steifigkeit nahezu 0) bedarf, nur schwer reproduzierbar einzustellen.

Berücksichtigt man nämlich die üblichen Maße der Membranplatte (etwa 1,5 - 2,5 mm dick) und des Membrankäfigs von etwa 5 - 6 mm Höhe, so ist daraus ersichtlich, daß sowohl die progressiv wirkenden Druckanschläge als auch der Membrankäfig für eine einwandfreie Funktion des Systems mit außerordentlich geringen Toleranzen hergestellt werden müssen, da schon Abweichungen von 1/10 bis 2/10 mm die Membranplatte entweder zum Klappern bringen oder so stramm verspannen, daß eine hinreichend freie Bewegung der Membranplatte über typische Wege von 2/10 bis 3/10 mm und damit die gewünschte hydraulische Entkopplung nicht mehr gegeben ist.

Eine für die Entkopplung bessere Lösung, die weniger abhängig von Fertigungstoleranzen ist, bietet die Membranlagerung mit Schubelementen, wie sie beispielsweise in der DE 37 31 524 A1 beschrieben ist.

Dabei ist die weitgehend starre Membranplatte am äußeren Umfang über einen dünnen, horizontal umlaufenden, konzentrischen Steg aus Gummi mit einem torusförmigen Gummiring verbunden, dessen Durchmesser geringfügig größer als die freie Höhe der Membrankammer ist, in die dieser Gummiring dann eingespannt wird.

Eine solche Anordnung erlaubt eine sehr weiche Lagerung der Membranplatte, erfordert dann aber sehr dünne und daher mechanisch wenig widerstandsfähige Gummischichten für das Schubelement. Zudem bedarf eine solche Anordnung noch zusätzlicher, weich einsetzender, progressiver Anschläge, damit die Entkopplung nur für Schwingungen kleiner Amplituden wirkt.

Bei diesem Membrantyp ergeben sich oft Probleme mit der dynamischen Dauerfestigkeit, da wegen der auftretenden Durckdifferenzen im Lager, die für große Amplituden zwischen + 3 bar und - 1 bar schwanken können, starke Spannungsspitzen im schub-belasteten Übergangsbereich des Elementes entstehen, was leicht zum Einreißen oder Abscheren führt.

Ausgehend von dem eingangs genannten Stand der Technik und der geschilderten Problematik liegt der vorliegenden Erfindung die Aufgabe zugrunde, ein hydraulisch dämpfendes Zweikammer-Motorlager zu schaffen, dessen Membranplatte leicht beweglich ist, nicht klappert und sich progressiv an ihre Begrenzungsflächen anlegt, d.h. ein Hydrolager, das einen weichen Übergang der pV-Kennlinie von nahezu horizontal verlaufendem Bereich zum schräg ansteigendem Bereich aufweist.

Zur Lösung dieser Aufgabe ist erfindungsgemäß vorgesehen, daß die aus starrem Material bestehende Membranplatte im randnahen Bereich mehrere Bohrungen aufweist, in die dünnwandige, rollmembranähnliche Federkörper aus gummielastischem Material von etwa hutförmiger Gestalt mit zurückgebogenem Rand derart eingesetzt sind, daß sie die Membranplatte nach oben und unten überragen derart, daß die hutförmigen Spitzen der Federkörper ständig in Kontakt mit der gegenüberliegenden, horizontalen Begrenzungsfläche der Membrankammer stehen, während die zurückgebogenen Ränder im Abstand zu ihrer Begrenzungsfläche enden.

Mit derartigen hutförmigen, dünnwandigen Federkörpern ist eine Halterung und Einspannung der Membranplatte geschaffen, die ein weiches und leichtes Ansprechen der Membranplatte auf eingeleitete hochfrequente Schwingungen erlaubt und die bei zunehmender Verformung der Federkörper und einem Anlegen der zurückgebogenen Ränder an ihre Begrenzungsfläche ein progressives Abbremsen der Bewegung der Membranplatte bewirkt und damit sicher verhindert, daß die Membranplatte gegen ihre Begrenzungen anschlägt und klappert.

Zweckmäßigerweise beträgt die Höhe des zurückgebogenen Randes maximal ein Drittel bis ein Viertel der Gesamthöhe des Federkörpers.

Die Federkörper sind dabei zweckmäßigerweise mit ihrem zurückgebogenen Rand auf der Ober- oder der Unterseite der Membranplatte anvulkanisiert.

Es ist aber auch möglich, daß die Federkörper im Endbereich des zurückgebogenen Randes auf ihrer Außenseite zwei, im Abstand der Membranscheibendicke parallel zueinander umlaufende Stege aufweisen, über die sie an den jeweiligen Bohrungsrändern an der Membranplatte eingeklipst sind.

Ferner ist es von Vorteil, wenn die Federkörper von Bohrung zu Bohrung abwechselnd einmal auf der Oberseite und einmal auf der Unterseite der Membranplatte befestigt sind und der zentrale, hutförmige Mittelteil der Federkörper die Bohrungen abwechselnd nach der einen oder der anderen Seite durchsetzt. Durch eine solche abwechselnde Anordnung wird die Membranplatte im unbelasteten Zustand stets mittig in der Membrankammer gehalten und es erfolgt ein weiches und kontinuierliches Ansprechen der Platte auf eingeleitete Schwingungen.

Anhand einer schematischen Zeichnung sind Aufbau und Funktionsweise eines Ausführungsbeispiels nach der Erfindung näher erläutert. Dabei zeigen:
- Fig. 1: einen Längsschnitt durch das Grundprinzip eines solchen hydraulisch dämpfenden Motorlagers,
- Fig. 2: eine Aufsicht auf eine Membranplatte mit eingesetzten Federkörpern,
- Fig. 3: einen Längsschnitt durch die Zwischenplatte mit Membranplatte entsprechend Fig. 1 im Ausschnitt und in vergrößertem Maßstab und entsprechend der Schnittlinie III - III nach Fig.2 und
- Fig. 4: einen Teilausschnitt mit eingeklipsten Federkörpern.

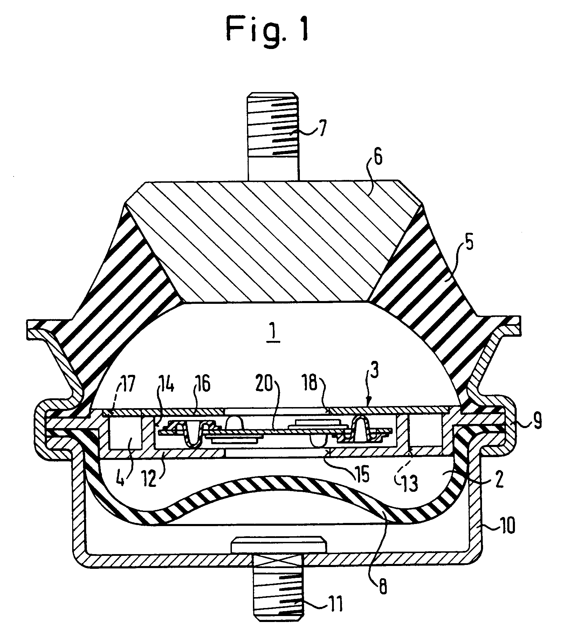

Wie man aus Figur 1 ersieht, weist das Zweikammer-Motorlager zunächst in herkömmlicher Weise eine obere, motorseitige Kammer 1 und eine untere Ausgleichskammer 2 auf, die über einen, in einer Zwischenplatte 3 verlaufenden Kanal 4 miteinander in Verbindung stehen. Die obere Kammer 1 wird von einer starkwandigen, hohlkegelförmigen Kammerwandung 5, der sog. Tragfeder, begrenzt, die an der oberen Stirnseite eine Lagerplatte 6 mit einem Bolzen 7 zur Festlegung am nicht näher dargestellten Motor aufweist. Die untere Kammer 2 ist von einer beispielsweise tassenförmigen Kammerwandung 8 aus ebenfalls gummielastischem, jedoch volumennachgiebigerem Material als das der Kammerwandung 5 gebildet, da die Kammer 2 praktisch nur als Ausgleichskammer fungiert. Alle Lagerteile sind über einen umlaufenden Ringflansch 9 flüssigkeitsdicht miteinander verspannt, wobei der Ringflansch 9 gleichzeitig den unteren Gehäusedeckel 10 mit einem Anschlußbolzen 11 zur Festlegung des Lagers an die Fahrzeugkarosserie mit erfaßt.

Nach dem dargestellten Ausführungsbeispiel besteht die Zwischenplatte 3 aus einer Bodenplatte 12, in die der ringförmige Verbindungskanal 4 mit einer gestrichelt angedeuteten Durchtrittsöffnung 13 zur Unterseite eingeschnitten ist. Ferner weist die Bodenplatte 12 eine zentrale, zylindrische Ausnehmung 14 auf, deren Unterseite mit einer zentralen Öffnung 15 oder entsprechenden Durchbrüchen versehen ist. Die in die Bodenplatte 12 eingeschnittenen Ausnehmungen 4 und 14 können dann durch eine zentrisch aufgesetzte Deckplatte 16 verschlossen sein, wobei diese Deckplatte 16 eine gestrichelt angedeutete Öffnung 17 als Verbindung vom Ringkanal 4 zur oberen Kammer 1 und eine zentrale Öffnung 18 oberhalb der Membrankammer 14 aufweist.

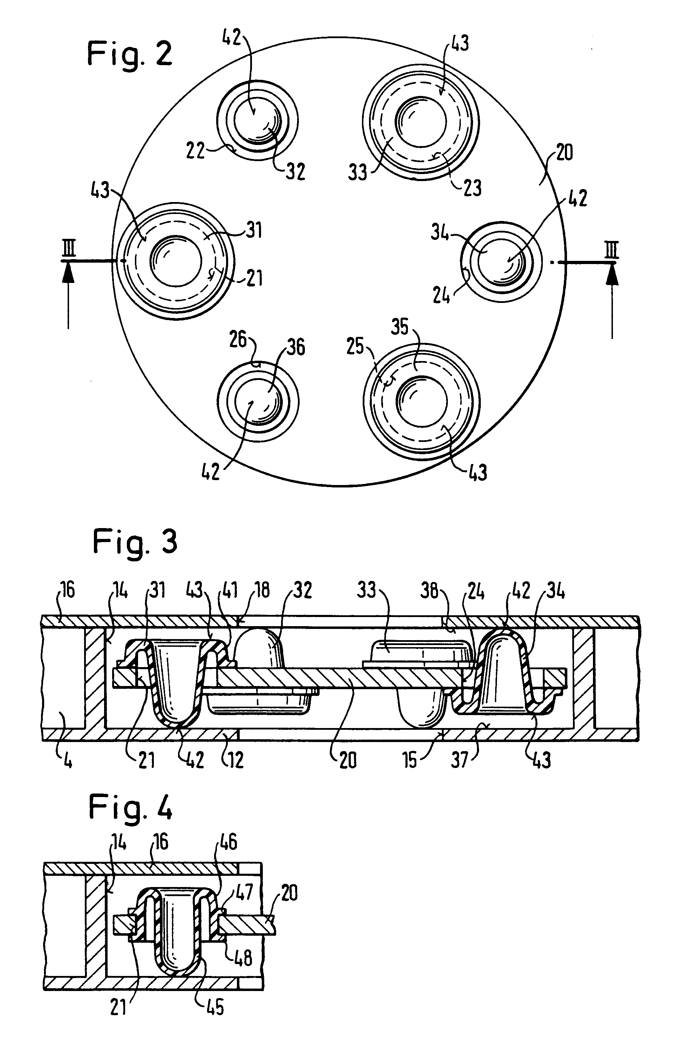

In die somit durch die Ausnehmung 14 gebildete Kammer ist nunmehr eine kreiszylindrische Membranplatte 20 eingesetzt, die im vergrößerten Maßstab anhand Figur 2 und 3 im einzelnen erläutert wird.

Die Membranplatte 20 besteht aus starrem Material, wie beispielsweise Kunststoff oder Aluminium, wobei die Membranplatte 20 einen geringfügig kleineren Durchmesser als den Innendurchmesser der Membrankammer 14 aufweist. In diese Membranplatte 20 sind - wie man insbesondere aus der Aufsicht nach Fig. 2 ersieht - im randnahen Bereich mehrere Bohrungen 21 - 26 symmetrisch zueinander eingeschnitten. In diese Bohrungen 21- 26 sind nunmehr - wie man insbesondere aus dem vergrößerten Längsschnitt nach Fig. 3 entsprechend der Schnittlinie III - III nach Fig. 2 erkennt - dünnwandige hohle Federkörper 31 - 36 aus gummielastischem Material in noch zu erläuternder Weise eingesetzt.

Diese rollmembranähnlichen Federkörper 31 - 36 haben eine etwa hutförmige Gestalt mit einem zurückgebogenen Rand 41, dessen Höhe etwa ein Drittel bis ein Viertel der Gesamthöhe eines Federkörpers beträgt. Diese Federkörper 31 - 36 sind nunmehr abwechselnd mit ihrer Spitze nach oben oder unten jeweils auf der Oberseite oder der Unterseite der Membranplatte 20 mit ihrem zurückgebogenen Rand 41 an den jeweiligen Bohrungsrand 21 - 26 angrenzend zweckmäßigerweise durch Vulkanisation befestigt. Sie können dabei in einem einzigen Vulkanisationsprozeß unmittelbar an die Membranplatte 20 anvulkanisiert werden. Die Größe und Gestaltung der einzelnen Federkörper ist dabei so zu bemessen, daß die hutförmigen Spitzen 42 jeweils an der gegenüberliegenden horizontalen Begrenzungsfläche 37 bzw. 38 der Membrankammer 14 anliegen, während die Unterseite 43 des zurückgebogenen Randes 41 im Abstand von ihrer jeweiligen gegenüberliegenden Begrenzungsfläche 38 bzw. 37 endet.

Bei einer Schwingungseinleitung von oben werden dann die Federkörper 31, 33 und 35, deren Spitzen 42 auf der unteren Begrenzungsfläche 37 aufruhen, sanft zusammengepreßt, bis die Unterseiten 43 der umgekehrt eingebauten Federkörper 32, 34 und 36 mit der Begrenzungsfläche 37 in Kontakt kommen und damit eine progressive Abfederung und ein progressives Anlegen an der Gegenfläche bewirken.

Das System wirkt in gleicher Weise bei einer Bewegung der Membranplatte 20 nach oben durch die entgegengesetzt eingebauten Federkörper 32, 34 und 36.

Wesentlich ist also, daß durch das Hindurchführen der Federkörper 31 bis 36 durch die Membranplatte 20 hindurch und einer Festlegung auf der anderen Seite der Membranplatte eine sehr viel größere, wirksame Federlänge geschaffen ist, als wenn die Federkörper allein auf der Anschlagseite der Membranplatte angebracht wären, so daß sich dadurch ein sehr viel weicheres Ansprechen ergibt.

In dem Teilausschnitt nach Fig. 4 ist noch eine weitere Art der Befestigung von Federkörpern 45 gezeigt. Dabei weisen diese Federkörper 45 im Endbereich ihres zurückgebogenen Randes 46 auf ihrer Außenseite zwei umlaufende Vorsprünge 47 und 48 auf, die im Abstand entsprechend der Dicke der Membranplatte 20 verlaufen. Die so gestalteten Federkörper 45 können dann sehr einfach in die Bohrungen 21 - 26 der Membranplatte 20 eingeklipst werden.

Darüberhinaus sind mit einer derartigen Gestaltung der Federkörper und ihrer Einspannung auch größere Fertigungstoleranzen leichter auszugleichen und zu bewältigen, ohne daß damit die Funktionsfähigkeit dieser Einspannung und Lagerung leidet.

Bei dem dargestellten Ausführungsbeispiel sind sechs Federkörper am Umfang der Membranplatte vorgesehen. Es ist aber auch jede andere Anzahl von Federkörpern möglich, wobei zweckmäßigerweise eine gerade Anzahl von Federkörpern gewählt wird, um damit einen wechselseitigen Einbau zu ermöglichen.

## Patentansprüche

1. Hydraulisch dämpfendes Zweikammer-Motorlager, dessen mit Flüssigkeit gefüllte und gummielastische Umfangswände (5; 8) aufweisende Kammern (1; 2) über einen, in einer starren Zwischenplatte (3) angeordneten Kanal (4) miteinander in Verbindung stehen und in dessen Zwischenplatte (3) eine stirnseitig zumindest zentral offene Kammer (14) eingelassen ist, in der eine beiderseits von Flüssigkeit beaufschlagte und parallel zur Richtung eingeleiteter Schwingungen bewegliche Membranplatte (20) eingespannt ist, dadurch gekennzeichnet, daß die aus starrem Material bestehende Membranplatte (20) im randnahen Bereich mehrere Bohrungen (21 - 26) aufweist, in die dünnwandige, rollmembranähnliche Federkörper (31 - 36; 45) aus gummielastischem Material von etwa hutförmiger Gestalt mit zurückgebogenem Rand (41) derart eingesetzt sind, daß sie die Membranplatte (20) nach oben und unten überragen derart, daß die hutförmigen Spitzen (42) der Federkörper (31 - 36; 45) ständig in Kontakt mit der gegenüberliegenden horizontalen Begrenzungsfläche (37, 38) der Membrankammer (14) stehen, während die umgebogenen Ränder (41) im Abstand zur Begrenzungsfläche enden.

2. Zweikammer-Motorlager nach Anspruch 1, dadurch gekennzeichnet, daß die Höhe des zurückgebogenen Randes (41) maximal ein Drittel bis ein Viertel der Gesamthöhe des Federkörpers (31 - 36) beträgt.

3. Zweikammer-Motorlager nach Anspruch 1 oder 2, dadurch gekennzeichnet, daß die Federkörper (31 - 36) mit ihrem zurückgebogenen Rand (41) auf der Ober- oder der Unterseite der Membranplatte (20) anvulkanisiert sind.

4. Zweikammer-Motorlager nach Anspruch 1 oder 2, dadurch gekennzeichnet, daß die Federkörper (45) im Endbereich des zurückgebogenen Randes (46) auf ihrer Außenseite zwei, im Abstand der Membranscheibendicke parallel zueinander verlaufende Vorsprünge (47, 48) aufweisen, über die sie an den jeweiligen Bohrungsrändern auf der Membranplatte (20) eingeklipst sind.

5. Zweikammer-Motorlager nach Anspruch 3 oder 4, dadurch gekennzeichnet, daß die Federkörper (31 - 36) von Bohrung (21) zu Bohrung (26) abwechselnd einmal auf der Oberseite und einmal auf der Unterseite der Membranplatte (20) befestigt sind und der zentrale, hutförmige Mittelteil der Federkörper (31 - 36) die Bohrungen (21 - 26) abwechselnd nach der einen oder der anderen Seite durchsetzt.

## Claims

1. Twin-chamber engine mounting with hydraulic damping, whose chambers (1; 2), which are filled with fluid and have elastomeric circumferential walls (5; 8), are connected together via a channel (4) disposed in a rigid intermediate plate (3), and in whose intermediate plate (3) a chamber (14) is set, which chamber is open at least in the centre at the front end and in which a diaphragm plate (20) which is acted upon by fluid on both sides and can move parallel to the direction of induced vibrations is fixed, characterised in that the diaphragm plate (20), which consists of rigid material, comprises in the region near the edge a plurality of bores (21 - 26) in which thin-walled, moving diaphragm-type spring bodies (31 - 36; 45) of an elastomeric material and an approximately hat-shaped form with a bent-back edge (41) are inserted such that they project upwards and downwards beyond the diaphragm plate (20) so that the hat-shaped peaks (42) of the spring bodies (31 - 36; 45) are constantly in contact with the opposite horizontal boundary surface (37, 38) of the diaphragm chamber (14), while the bent-back edges (41) end at a distance from the boundary surface.

2. Twin-chamber engine mounting according to claim 1, characterised in that the height of the bent-back edge (41) is at most between one third and one quarter of the overall height of the spring body (31 - 36).

3. Twin-chamber engine mounting according to claim 1 or 2, characterised in that the spring bodies (31 - 36) are moulded onto the top side or the underside of the diaphragm plate (20) by way of their bent-back edge (41).

4. Twin-chamber engine mounting according to claim 1 or 2, characterised in that the spring bodies (45) comprise on their outside two projections (47, 48) circulating in parallel at a spacing corresponding to the diaphragm plate thickness in the end region of the bent-back edge (46), via which projections they are clipped onto the respective bore edges on the diaphragm plate (20).

5. Twin-chamber engine mounting according to claim 3 or 4, characterised in that the spring bodies (31 - 36) are attached alternately from bore (21) to bore (26) firstly to the top side and then to the underside of the diaphragm plate (20), and the central, hat-shaped centre part of the spring bodies (31 - 36) passes through the bores (21 - 26) alternately to the one or the other side.

## Revendications

1. Support de moteur à deux chambres et à amortissement hydraulique, dont les chambres (1 ; 2), emplies de liquide et comportant des parois périphériques (5 ; 8) ayant l'élasticité du caoutchouc, communiquent entre elles par un canal (4) ménagé dans un plateau intermédiaire rigide (3) ; dans lequel une chambre (14) ouverte au moins au centre du côté frontal est ménagée dans le plateau intermédiaire (3), et une plaque de membrane (20) sollicitée des deux côtés par du liquide et mobile parallèlement à la direction d'oscillations provoquées est enserrée dans ladite chambre (14),
caractérisé en ce que la plaque de membrane (20) réalisée en un matériau rigide présente dans la région proche de la bordure plusieurs perçages (21 - 26), dans lesquels des corps élastiques (31 - 36 ; 45), à paroi mince et analogues à des membranes déroulantes, en un matériau ayant l'élasticité du caoutchouc et sous une forme approximativement en capuchon avec un bord rabattu (41), sont mis en place de telle manière qu'ils dépassent de la plaque de membrane (20) vers le haut et vers le bas, de telle sorte que les sommets (42) en forme de capuchon des corps élastiques (31 - 36 ; 45) sont en permanence en contact avec la surface de délimitation horizontale opposée (37, 38) de la chambre (14) de la membrane, tandis que les bords rabattus (41) se terminent à distance de la surface de délimitation.

2. Support de moteur à deux chambres selon la revendication 1, caractérisé en ce que la hauteur du bord rabattu (41) s'élève au maximum à un quart jusqu'à un tiers de la hauteur totale du corps élastique (31 - 36).

3. Support de moteur à deux chambres selon l'une ou l'autre des revendications 1 et 2, caractérisé en ce que les corps élastiques (31 - 36) sont vulcanisés par leur bord rabattu (41) sur la face supérieure ou inférieure de la plaque de membrane (20).

4. Support de moteur à deux chambres selon l'une ou l'autre des revendications 1 et 2, caractérisé en ce que les corps élastiques (45) comportent dans la région terminale du bord rabattu (46) et sur leur face extérieure deux saillies (47, 48) s'étendant parallèlement l'une à l'autre à distance de l'épaisseur de la plaque de membrane, lesdits corps élastiques étant encliquetés au moyen desdites saillies sur les bordures des perçages respectifs sur la plaque de membrane (20).

5. Support de moteur à deux chambres selon l'une ou l'autre des revendications 3 et 4, caractérisé en ce que les corps élastiques (31 - 36) sont fixés d'un perçage (21) au suivant (26) en alternance sur la face supérieure et sur la face inférieure de la plaque de membrane (20), et en ce que la partie médiane centrale en forme de capuchon du corps élastique (31 - 36) traverse les perçages (21 - 26) en alternance vers un côté ou l'autre.
